# FASCICULE DE BREVET EUROPEEN

(11) **EP 0 968 381 B1**
(45) Date de publication et mention de la délivrance du brevet: **22.01.2003**
(21) Numéro de dépôt: 98904341.9
(22) Date de dépôt: 10.03.1998
(51) Int. Cl.: F16H 25/06, F01C 1/344

(54) **MECANISME DESMODROMIQUE**
DESMODROMISCHER ANTRIEB
DESMODROMIC MECHANISM

(30) Priorité: 18.03.1997 CH 66297
(43) Date de publication de la demande: 05.01.2000
(60) Demande divisionnaire: 02025169.0
(73) Titulaire: Bajulaz, Roger, 1209 Geneve (CH)
(72) Inventeur: Bajulaz, Roger, 1209 Geneve (CH)
(74) Mandataire: Micheli & Cie
(86) Numéro de dépôt international: IB9800310
(87) Numéro de publication internationale: WO98041781

(56) Documents cités:
- EP-A- 0 168 152
- WO-A-95/10691
- CH-A- 151 431
- DE-C- 338 495
- DE-C- 350 767
- GB-A- 1 199 257
- US-A- 1 449 352
- US-A- 3 468 175

## Description

La présente invention a pour objet un mécanisme desmodromique comprenant un élément primaire et un élément secondaire reliés mécaniquement par une liaison desmodromique, c'est-à-dire telle que la vitesse d'un desdits éléments entraîne une vitesse bien déterminée pour l'autre.

De tels mécanismes se retrouvent dans des variateurs de vitesse, des multiplicateurs ou réducteurs de vitesse, des moteurs hydrauliques, pneumatiques ou à combustion, compresseurs, pompes, vérins, actionneurs linéaires, etc.

Pour réaliser des entraînements angulaires ou linéaires destinés à des mécanismes dont le but est de transmettre des mouvements permettant de modifier des volumes pour obtenir des pompes, compresseurs, etc, ou de réduire ou multiplier des vitesses avec une certaine précision, on fait usage d'engrenages qui présentent dans certains cas des inconvénients majeurs, tels que problèmes de graissage, bruit, encombrement, difficultés pour obtenir des déplacements sans jeu, prix de revient, etc.

Le brevet DE 338495 expose un mécanisme tel que défini dans le préambule de la revendication 1, ce mécanisme comprenant une came primaire et une came secondaire ainsi qu'un élément intermédiaire hébergeant des corps qui glissent ou roulent dans leur logement en permettant un déplacement rotatif entre lesdites trois parties principales. Les logements des corps dans l'élément intermédiaire constituent des guides pour leur mouvement. Ces corps comportent des surfaces lisses assurant un contact permanent avec la came primaire et la came secondaire et permettent l'entraînement entre les deux cames et l'élément intermédiaire. Les cames sont agencées de manière à ce que l'élément entraîné tourne avec une vitesses prédéterminée et différente de la vitesse de l'élément moteur.

Le brevet GB 1199257 décrit un variateur de vitesse comprenant également une came primaire, une came secondaire et un élément intermédiaire qui peuvent effectuer des mouvement rotatifs relatifs en modifiant la vitesse de ou des éléments entraînés par rapport à la vitesse de l'élément moteur. Ce mécanisme comporte des éléments étant en contact permanent avec les deux cames et roulant dans des logement de l'élément intermédiaire servant comme guides du mouvement. L'assemblage et la conception des composants sont différents par rapport au mécanisme précédent.

Le document US 3468175 divulgue un mécanisme de transmission de mouvement. Dans une forme d'exécution, ce mécanisme sert à la transmission des mouvements rotatifs avec une modification de la vitesse de la rotation et comporte également deux cames et un élément intermédiaire. Cet élément héberge des corps roulant dans leur logement qui ne sont pas en contact permanent avec les deux cames dans ce cas.

Toutefois, aucun des mécanismes précités ne comporte une chambre étanche formée entre les éléments principaux du mécanisme ce qui permettrait d'utiliser un tel mécanisme par exemple comme moteur à combustion, moteur hydraulique, moteur pneumatique, compresseur ou pompe. Les mécanismes conventionnels sont donc adaptés uniquement à leur fonction primaire mécanique de transmetteur de mouvement ou de variateur de vitesse limitant ainsi leur application et constituant un inconvénient important.

Le but est de réaliser les mécanismes mentionnés ci-dessus par un système desmodromique simple, précis, robuste et d'un prix de revient inférieur à celui des réalisations conventionnelles.

Ce système permet l'emploi de matières plastiques, de céramique dans des conditions optimum. Il est possible de réaliser des mécanismes qui peuvent fonctionner sans graissage et d'une grande résistance mécanique.

Par la réduction de vitesse entre l'arbre d'entrée et l'élément intermédiaire porteur des transmetteurs des améliorations importantes sont apportées dans les mécanismes faisant appel à des chambres à volumes variables.

Le but de la présente invention est de réaliser un tel mécanisme desmodromique bon marché, robuste, facile à réaliser, qui ne comporte aucun engrenage et qui permette de provoquer un mouvement rotatif de l'élément entraîné à partir d'un mouvement rotatif de l'élément moteur ou vice-versa, et qui comporte une chambre étanche afin de permettre l'utilisation du mécanisme par exemple comme moteur à combustion, moteur hydraulique, moteur pneumatique, compresseur ou pompe.

La présente invention a pour objet un mécanisme desmodromique tendant à obvier aux inconvénients précités et permettant de réaliser les buts énoncés. Ce mécanisme desmodromique se caractérise par la combinaison d'éléments énoncés à la revendication 1.

Le dessin annexé illustre schématiquement et à titre d'exemple plusieurs formes d'exécution du mécanisme de l'invention.

La figure 1 est une vue en perspective, partiellement éclatée, d'une première forme d'exécution du mécanisme.

Les figures 2 à 6 illustrent les positions successives du mécanisme pour des rotations successives de 90° de l'élément primaire du mécanisme.

Les figures 7 et 8 illustrent une coupe axiale et une coupe longitudinale du mécanisme dans une application de celui-ci pour un moteur à combustion interne.

Les figures 9 à 12 illustrent les positions des éléments du mécanisme pour les quatre temps, admission, compression, explosion et échappement du moteur.

La figure 13 illustre une coupe axiale du mécanisme utilisé comme compresseur.

Les figures 14 à 18 illustrent des positions successives du mécanisme de la figure 13 illustrant le fonctionnement de celui-ci comme compresseur à air.

Les figures 19 à 23 illustrent les positions successives d'une seconde forme d'exécution du mécanisme pour des incréments angulaires de 90° de l'élément primaire; l'élément secondaire étant stationnaire.

Les figures 24 à 28 illustrent les positions successives de la seconde forme d'exécution du mécanisme pour des incréments de 30° de l'élément secondaire, l'élément intermédiaire étant stationnaire.

Les figures 29 et 30 illustrent deux variantes d'une troisième forme d'exécution du mécanisme comportant cinq organes transmetteurs.

Les figures 31 et 32 illustrent une quatrième forme d'exécution du mécanisme dans laquelle les frictions sont supprimées par l'utilisation d'éléments tournants.

La figure 33 illustre en plan et schématiquement une variante de la forme d'exécution du mécanisme illustré aux figures 31 et 32.

Les figures 34 et 35 illustrent une cinquième forme d'exécution du mécanisme.

La figure 36 est une coupe axiale d'une sixième forme d'exécution du mécanisme.

Les figures 37 à 41 illustrent les positions des éléments du mécanisme de la figure 36 pour des incréments successifs de 90° de l'élément primaire lorsque l'élément secondaire reste stationnaire.

La figure 42 est une vue en coupe longitudinale d'une septième forme d'exécution du mécanisme.

Les figures 43 à 47 illustrent les positions successives du mécanisme de la figure 42 pour des déplacements angulaires de 90° de l'élément secondaire, l'élément intermédiaire étant stationnaire.

Les figures 48, 49 et 50 sont des schémas de la première forme d'exécution du mécanisme illustré aux figures 1 à 6 mettant en évidence une caractéristique particulière fondamentale du mécanisme se retrouvant dans toutes ses formes d'exécutions.

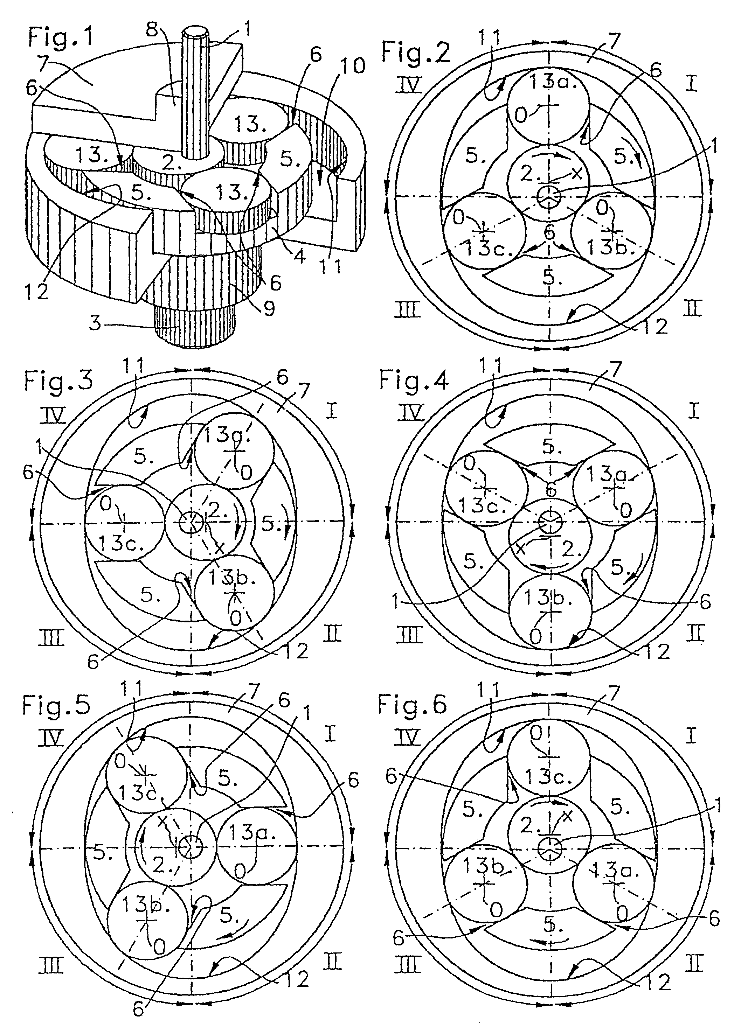

La première forme d'exécution du mécanisme desmodromique selon l'invention illustrée aux figures 1 à 6 comporte un arbre d'entrée 1 dont l'extrémité est munie d'une came primaire 2 formée ici d'un excentrique à une levée.

Ce mécanisme comporte encore un arbre de sortie 3, concentrique à l'arbre d'entrée 1, dont l'extrémité est munie d'un plateau 4 comportant des bossages axiaux 5 définissant entre eux des rainures ou guides rectilignes 6. Cet ensemble constitue un élément intermédiaire du mécanisme.

En position montée de service, la came primaire 2 est située au milieu des bossages 5 de l'élément intermédiaire.

Un carter 7 comporte des paliers 8, 9 pour les arbres d'entrée 1 et de sortie 3 et présente une cavité interne 10 dans laquelle sont disposés le plateau 4 et la came primaire 2. La paroi périphérique de cette cavité interne 10 du carter 7 constitue une came secondaire comportant dans cette exécution deux levées 11, 12.

Des organes transmetteurs 13 de mouvement se présentent sous la forme de galets cylindriques et sont disposés dans chacun des guides 6 situés entre les bossages 5 du plateau 4 de l'élément intermédiaire 3. Ces organes transmetteurs 13 coulissent sans jeu dans les guides 6 entre les bossages 5 et sont en contact par leur périphérie simultanément avec la came primaire 2 et la came secondaire à deux levées 11,12. De plus, ces organes transmetteurs 13 sont en appui permanent contre au moins une des faces latérales des guides 6 de l'élément intermédiaire. Ainsi, chaque organe transmetteur 13 est en contact permanent avec la came primaire 2, la came secondaire et l'élément intermédiaire.

Si l'on maintient le carter 7 stationnaire et que l'on provoque la rotation de l'arbre d'entrée 1 on obtient le positionnement successif des éléments du mécanisme. De la figure 2 à la figure 3, l'élément primaire 1 a effectué une rotation de 90°, la levée de la came primaire force l'organe transmetteur 13b vers l'extérieur, en suivant le profil de la came secondaire, ce qui provoque la rotation, dans le même sens, de l'élément intermédiaire et de l'arbre de sortie 3.

Une rotation successive de 90° (de la figure 3 à la figure 4) de l'arbre d'entrée 1 provoque, par la levée de la came primaire, le déplacement vers l'extérieur des organes transmetteurs 13b et 13c toujours en contact avec la came secondaire provoquant de nouveau une rotation de 30° de l'élément intermédiaire. De la position de la figure 4 à celle de la figure 5 l'effort se transmet de la came primaire 2 à l'élément intermédiaire par les organes transmetteurs 13a et 13c. Lorsque la came primaire a effectué un nouveau déplacement de 90°, l'élément intermédiaire a effectué une nouvelle rotation de 30°. Puis par une nouvelle rotation de 90° de la came primaire 2 (de la figure 5 à la figure 6) ce sont les organes transmetteurs 13a et 13c qui continuent à entraîner l'élément intermédiaire d'un nouveau déplacement de 30°. A cet instant, on revient à la configuration de départ de la figure 2, l'organe transmetteur 13c ayant pris la position de l'organe transmetteur 13a. L'arbre d'entrée 1 et la came primaire 2 ont effectué une rotation de 360° et ce faisant ont entraîné de façon desmodromique l'élément intermédiaire sur une distance angulaire de 120°, soit 1/3 de la distance angulaire parcourue par l'élément primaire 1. On obtient ainsi une réduction de vitesse de 3 à 1 entre l'arbre d'entrée 1 et l'arbre de sortie, et ceci avec un mécanisme sans engrenage et présentant un minimum de frottement voire uniquement de roulement. Le mécanisme décrit est strictement desmodromique, c'est-à-dire que les vitesses des éléments 1 et 3 sont strictement proportionnelles. Si la vitesse de l'arbre d'entrée 1 est constante, la vitesse de rotation de l'arbre de sortie 3 sera également constante, sans aucune ondulation, à une valeur trois fois plus faible que celle de l'arbre d'entrée 1.

On constate que, lorsque le carter est statique, pour un déplacement angulaire de la came primaire de 360° l'élément intermédiaire effectue une rotation dans le même sens de 120°, il y a donc bien un rapport de 1 à 3. Par contre, si c'est l'élément intermédiaire qui est fixe une rotation de 360° de la came primaire provoque une rotation de sens inverse du carter de 180°; il y a donc dans ce cas un rapport de 1 à 2.

Dans un tel mécanisme, les rapports de démultiplication sont toujours des nombres entiers.

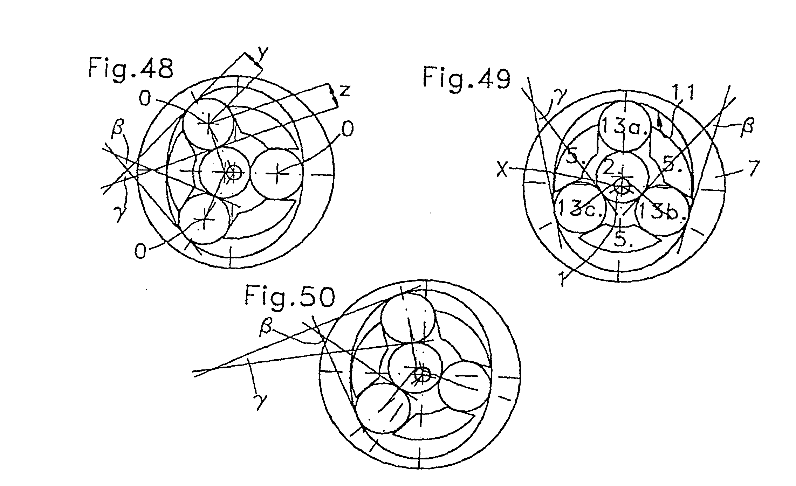

En référence à la figure 49, on voit que l'organe transmetteur 13a est en contact avec le sommet de la came primaire 2 et le creux 11 de la came secondaire. Dans cette position les tangentes aux points de contact de l'organe transmetteur 13a avec les cames primaire, respectivement secondaire, sont parallèles entre elles. Dans cette position, l'organe transmetteur 13a ne peut transmettre aucun couple ni aucun mouvement.

Si l'on trace les mêmes tangentes pour les organes transmetteurs 13b et 13c, les points de contact de ces organes transmetteurs avec les cames primaire et secondaire s'étant déplacés et n'étant plus situés sur un diamètre de l'organe transmetteur, ces tangentes forment un angle aigu β, γ entre elles. On remarque que ces angles β, γ sont situés l'un en direction du sens horaire et l'autre dans le sens anti-horaire, donc sont en opposition. Ainsi, lorsque le mécanisme est à l'arrêt, la position relative des trois éléments, came primaire 2, came secondaire 11,12 et élément intermédiaire 5,13 est bloquée dans un sens par l'organe transmetteur 13c et dans l'autre par l'organe transmetteur 13b. Le mécanisme ne peut donc subir aucun déplacement involontaire.

Par contre, dès que la came primaire 2 est entraînée en rotation dans le sens horaire, l'organe transmetteur 13b est poussé vers l'extérieur provoquant un déplacement de l'élément intermédiaire dans le sens horaire également. Ceci est rendu possible car simultanément de par la rotation de la came primaire 2 l'angle γ est progressivement agrandi ce qui permet un déplacement passif de l'organe transmetteur 13c.

Revenant aux figures 1 à 6, on constate que les organes transmetteurs sont actifs, pour une rotation de la came primaire 2 dans le sens horaire, lorsqu'ils sont situés dans les quadrants II et IV et passifs lorsqu'ils sont situés dans les quadrants I et III. Comme au cours de la rotation de l'élément intermédiaire il se trouve toujours au moins un organe transmetteur situé dans l'un des quadrants II et IV et au moins un autre dans l'un des quadrants I et III, il y a donc toujours au moins un organe transmetteur actif pendant la rotation du mécanisme. A l'arrêt du mécanisme par contre cette disposition fait qu'il est bloqué dans les deux sens quelque soit la position angulaire dans laquelle l'organe intermédiaire est arrêté.

On voit que le volume de l'espace 10 contenu entre deux organes transmetteurs 13, la surface périphérique de la saillie 5 de l'élément intermédiaire en contact avec ces organes transmetteurs 13 et la portion de la surface périphérique interne du carter 7, ou came secondaire, est variable en fonction de la rotation de l'arbre d'entrée 1 et de la came primaire 2. Cette particularité permet d'envisager des applications de ce mécanisme non seulement comme réducteur ou multiplicateur, mais également comme moteur, compresseur ou pompe.

Dans le cas où les saillies 5 n'assurent pas l'étanchéité du volume 10, soit que ces saillies comportent des passages, soit que leur hauteur soit inférieure à celle des organes transmetteurs 13, le volume variable 10 est alors déterminé par deux organes transmetteurs voisins et les parties des cames primaire et secondaire comprises entre ces deux organes transmetteurs.

On remarque que le nombre d'organes transmetteurs 13 est égal au nombre de levées de la came primaire 2 augmenté du nombre de levées 11,12 de la came secondaire, dans cet exemple égal à trois.

On remarque également (figure 2) que la distance entre le point haut de la levée de la came primaire 2 et le point haut 11 de la came secondaire de l'élément secondaire 7 est égale au diamètre de l'organe transmetteur 13, soit la distance comprise entre deux points de contact extrêmes de cet organe transmetteur.

Il en est de même de la distance (figure 4) séparant le point bas de la came primaire 2 et le point bas de la came secondaire.

La somme de la longueur y entre le centre de l'organe transmetteur et son contact avec la came primaire et de la longueur z entre le centre de l'organe transmetteur et de son contact avec la came secondaire est égale pour tous les éléments d'un même mécanisme et invariable dans toutes les positions de fonctionnement (figure 48).

On remarque dans cette exécution que au cours du mouvement du mécanisme le centre 0 des trois organes transmetteurs 13 est en permanence situé sur un cercle dont le centre est confondu avec l'axe X de la came primaire 2. Ici, la came primaire 2 est constituée par un excentrique tandis que la came secondaire est constituée par une surface ovale. La came primaire 2 est située à l'intérieur de la came secondaire.

Les forces de frottement ou de roulement sont très réduites puisqu'elles se limitent au glissement des organes transmetteurs 13 dans leurs guides 6 et à leur roulement contre les cames primaire 2 et secondaire.

Après la description de cette première forme d'exécution du mécanisme desmodromique selon l'invention il est évident que ce mécanisme se compose essentiellement d'une came primaire, d'une came secondaire et d'un élément intermédiaire définissant des guides linéaires dans lesquels coulissent des organes transmetteurs de mouvement; les deux cames et l'élément intermédiaire étant déplaçables les uns par rapport aux autres.

Pour la clarté et la précision de la description qui va suivre des différentes formes d'exécution du mécanisme, il faut dores et déjà définir que la came primaire peut se trouver à l'intérieur de la came secondaire ou vice-versa, ou que les deux cames peuvent se faire face axialement; mais toujours l'élément intermédiaire se trouve entre les deux cames.

Les deux cames peuvent être mobiles et l'élément intermédiaire stationnaire où l'une des cames et l'élément intermédiaire sont mobiles mais alors l'autre came est stationnaire. L'une ou l'autre des cames peut être entraînée l'autre came ou l'élément intermédiaire étant alors l'entraîneur ou vice-versa.

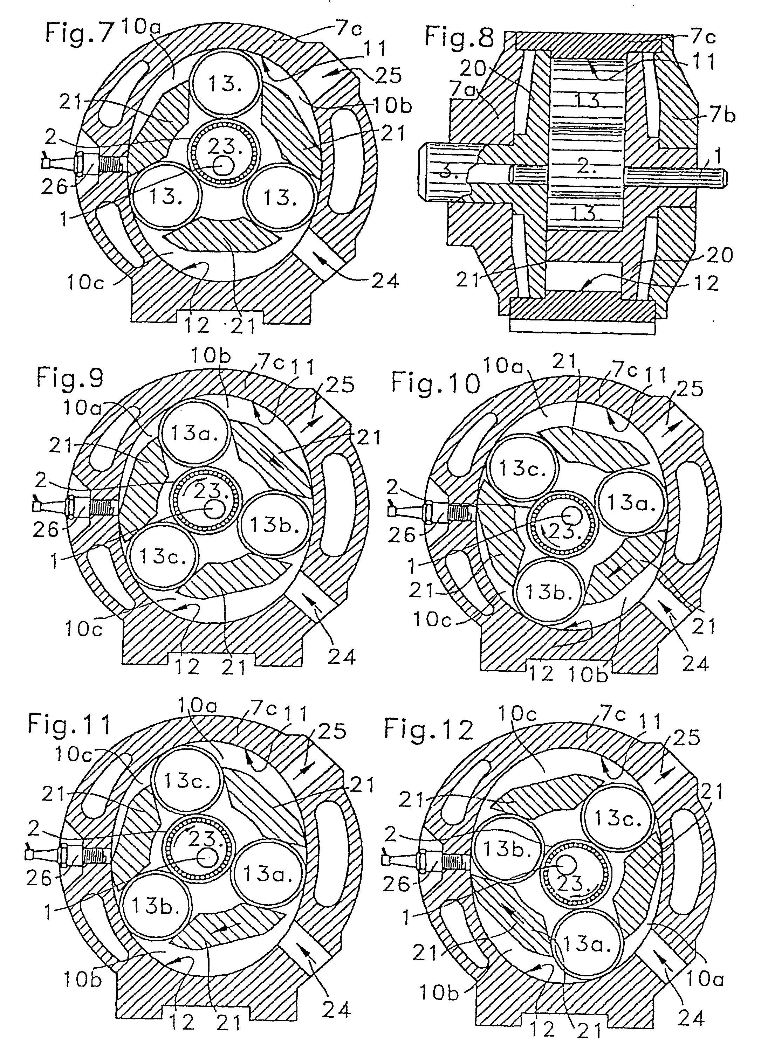

Les figures 7 et 8 illustrent en coupe transversale et longitudinale une application du mécanisme décrit plus haut pour la réalisation d'un moteur à explosion. Pour une meilleure compréhension et une simplification de la description, les mêmes chiffres de référence qu'aux figures 1 à 6 seront utilisés pour désigner des pièces correspondantes.

Dans cette application, le carter 7 est maintenu stationnaire et constitue le bloc moteur. Pour des raisons de construction, il est réalisé en trois pièces dans cet exemple, deux flasques 7a et 7b ainsi qu'une couronne 7c. Ces trois pièces 7a, 7b et 7c sont solidaires les unes des autres et stationnaires.

L'élément intermédiaire comporte un arbre 3 tourillonné dans les deux flasques 7a, 7b du carter. Cet arbre 3 est solidaire de deux flancs 20 reliés entre eux par des ponts 21 équivalents aux bossages 5 de la première forme d'exécution du mécanisme. Ces flancs 20 tournent sans jeu et de façon étanche par rapport à la couronne 7c dont la partie médiane de la face interne constitue la came secondaire comprenant les deux levées 11,12.

L'arbre d'entrée 1 est tourillonné dans l'arbre 3 et porte la came primaire 2.

Les organes transmetteurs 13 sont disposés entre les ponts 21, la face interne ou came secondaire du carter 7c, la came primaire 2 et les flancs 20. Ces organes transmetteurs 13 assurent un contact étanche entre les pièces avec lesquelles ils sont en contact et délimitent ainsi trois chambres à volume variable 10a, 10b, 10c. Pour limiter les forces de friction entre la came primaire 2 et les organes transmetteurs 13 on prévoit dans cette exécution un roulement à aiguilles 22 entre un excentrique 23 solidaire de l'arbre 1 et une bague circulaire constituant la surface extérieure de la came primaire 2.

La couronne 7c du carter comporte encore une tubulure d'admission 24 d'un mélange combustible, une tubulure d'échappement 25 des gaz de combustion et une bougie d'allumage 26, décalés angulairement de 120° environ les uns par rapport aux autres.

Les organes transmetteurs 13 peuvent être tubulaires et munis de moyens d'étanchéité garantissant une bonne compression et un faible coefficient de frottement et de roulement.

Les quatre temps du cycle de fonctionnement du moteur sont illustrés aux figures 9 à 12. La figure 9 illustre l'admission du mélange gazeux dans la chambre à volume variable 10c par le conduit 24. La came primaire 2 et l'élément intermédiaire tournent dans le sens des aiguilles d'une montre. La figure 10 illustre le moteur au moment où la compression est sur le point d'atteindre le maximum dans la chambre à volume variable 10c et où l'explosion est provoquée par la bougie 26. La rotation des éléments continue et la figure 11 illustre le moteur en phase d'expansion de la chambre à volume variable 10c puis la figure 12 illustre la mise à l'échappement 25 de la chambre à volume variable 10c. Il est évident que les trois chambres à volume variable passent par le même cycle de quatre temps, de sorte que pour une révolution complète de l'élément intermédiaire 3,21 chaque chambre à volume variable 10a, 10b, 10c aura un temps d'explosion et d'expansion. Ce faisant, l'arbre 1 et la came primaire 2 auront effectué trois tours complets.

Un tel moteur possède donc deux prises de force rotatives, l'arbre 1 solidaire de la came primaire et l'élément intermédiaire 3, la vitesse de rotation de cet élément intermédiaire 3 étant trois fois plus faibles que celle de l'élément primaire 1.

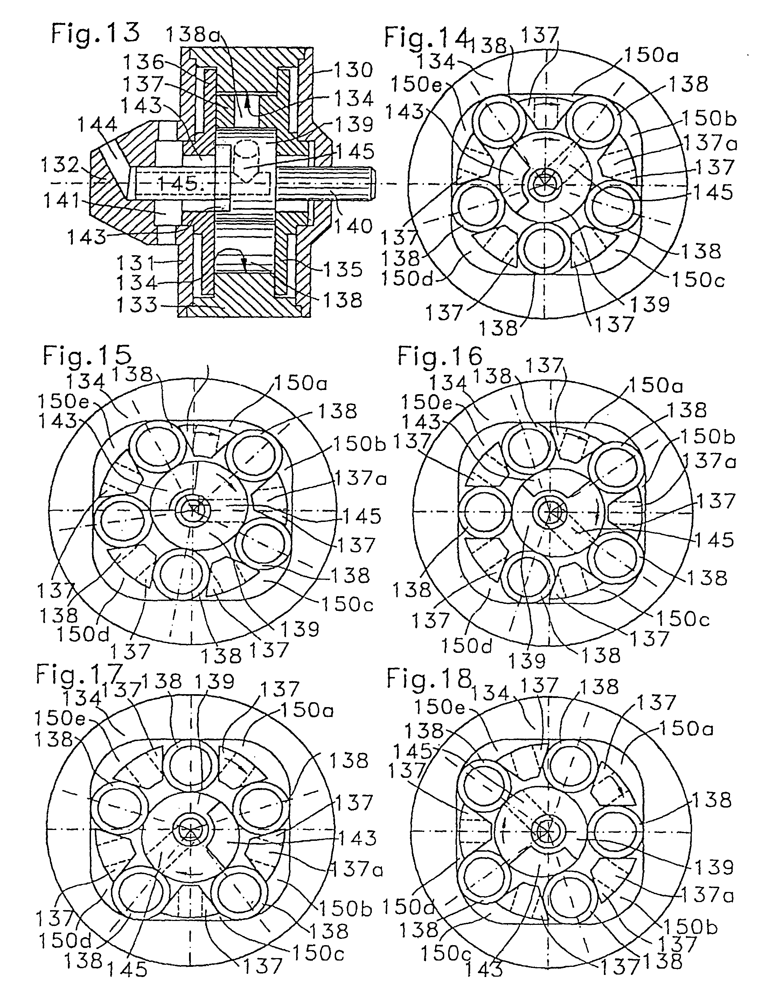

Les figures 13 à 18 illustrent une autre forme d'exécution du mécanisme et son application comme compresseur.

Le mécanisme comporte un carter formé de deux flasques 130,131, dont l'un comporte un moyeu 132, reliés par une couronne 133 dont la surface interne 134 constitue la came secondaire qui ici présente quatre levées.

L'élément intermédiaire est formé de deux flancs 135,136 reliés par des ponts 137, munis de passages d'air 137a, définissant entre eux des guides rectilignes radiaux dans lesquels coulissent des organes transmetteurs 138 formés par des éléments tubulaires. La liaison entre chaque flanc 135,136 rotatif et la couronne 133 fixe est étanche.

Le mécanisme comporte encore une came primaire 139 à une levée formée par un excentrique solidaire d'un arbre d'entrée 140 pivoté dans le flasque 130 et le moyeu 132 du carter.

Les organes transmetteurs 138 coulissent de façon étanche entre les flancs 135,136 mais non étanche dans les guides radiaux et sont en contact permanent et étanche avec les deux cames primaire 139 et secondaire 134. Ces organes transmetteurs définissent ainsi avec les cames primaire et secondaire des chambres étanches à volume variable 150, au nombre de cinq.

Ce mécanisme comporte encore au moins un orifice d'alimentation 141 dans le moyeu 132 du carter communiquant par un alésage 142 du flanc 136 avec un secteur de distribution 143 évidé dans l'une des faces latérales de la came primaire 139.

Ce mécanisme comporte encore un conduit d'échappement 144 dans le moyeu 132 du carter, communiquant avec un perçage 145, pratiqué dans l'extrémité de l'arbre 140 et la came primaire 139, débouchant vers la périphérie de cette came primaire.

Le secteur de distribution 143 s'étend sur une étendue angulaire sensiblement égale à 90° et l'une de ses extrémités est diamétralement opposée à l'axe du perçage 145.

Dans une telle exécution du mécanisme le carter est stationnaire, et pour une révolution complète de 360° de l'arbre d'entrée 140 solidaire de la came primaire 139 l'élément intermédiaire effectue une rotation de 72° soit 1/5 de tour.

Le fonctionnement du compresseur ainsi réalisé par le mécanisme est le suivant en référence aux figures 14 à 18. Sur la figure 14 la chambre à volume variable 150a est à son volume le plus faible, isolée de l'admission 143 et de l'échappement 145. La chambre à volume variable 150b est reliée à l'échappement 145 alors que les chambres à volume variable 150 d et e sont reliées à l'admission. Une rotation de l'arbre d'entrée 140 et de la came primaire 139 de 45° provoque une rotation de l'élément intermédiaire et des chambres à volume variable 150 de 9° amenant le mécanisme dans la position illustrée à la figure 15.

La chambre à volume variable 150 a est reliée à l'admission et la chambre à volume variable 150 b est mise à l'échappement. Le volume de la chambre 150a augmente tandis que le volume de la chambre 150b diminue refoulant le gaz qu'elle contient dans le conduit d'échappement 144.

Pour une nouvelle rotation de 45° de l'arbre 140 on arrive à la position illustrée à la figure 16, la chambre 150 b est à son plus petit volume et elle n'est plus reliée à l'échappement mais c'est la chambre 150 c qui est reliée à l'échappement tandis que les chambres 150 d et a sont reliées à l'admission. Pendant une nouvelle rotation de la came primaire de 90° pour arriver à la position illustrée à la figure 17, la chambre à volume variable 150 c diminue de volume et expulse à l'échappement son contenu. Pendant une nouvelle rotation de la came primaire de 90° pour arriver à la position illustrée à la figure 18, la chambre à volume variable 150 d expulse son contenu à l'échappement tandis que les chambres 150c et 150b se remplissent puisqu'elles sont reliées à l'admission.

Par la rotation de l'arbre d'entrée 140 on provoque la mise à l'échappement successive de chaque chambre à volume variable pendant que leur volume diminue et le remplissage des chambres pendant l'augmentation de leur volume. Le mécanisme constitue ainsi un compresseur continu. Le couple nécessaire sur l'arbre d'entrée 140 pour obtenir un taux de compression élevé et réduit par la démultiplication de 5 à 1 du mouvement rotatif entre l'arbre d'entrée et l'élément intermédiaire qui définit avec la came secondaire les chambres à volume variable.

On voit donc que le mécanisme selon l'invention peut être utilisé comme réducteur ou multiplicateur mécanique (figures 1 à 6), comme moteur à explosion (figures 7 à 12) ou comme compresseur ou moteur hydraulique ou pneumatique (figures 13 à 18). II est également appliqué pour réaliser des mouvements linéaires par exemple pour des vérins, des actionneurs linéaires des déplacements d'éléments de longeurs indéfinies en remplacement de crémaillères, chaînes, etc. Ainsi, en utilisant un même principe mécanique, plusieurs applications très diverses sont réalisables ce qui rend ce mécanisme particulièrement polyvalent.

Dans ce qui suit, on décrira encore plusieurs formes d'exécution et variantes du mécanisme qui, si elles se réfèrent à l'application en réducteur ou multiplicateur de vitesse, peuvent bien entendu être utilisées dans les concepts mentionnés ci-dessus.

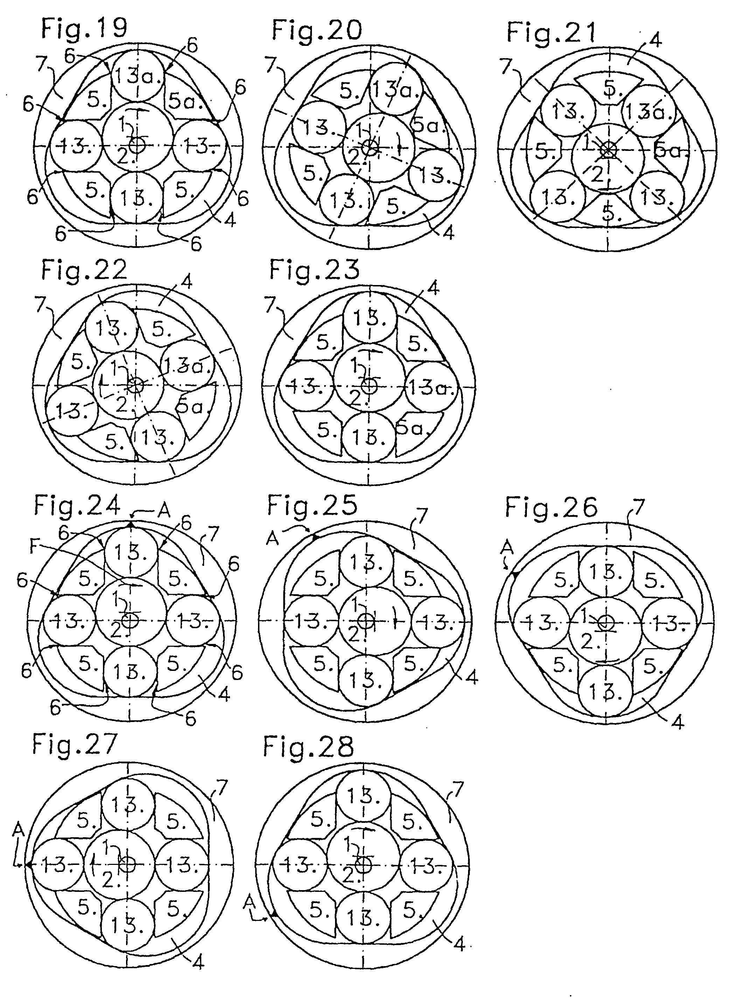

La forme d'exécution du mécanisme desmodromique selon l'invention illustrée aux figures 19 à 23 comporte un arbre d'entrée 1 solidaire d'une came primaire 2 à une levée et un carter 7 fixe présentant une came secondaire à trois levées formée par la paroi périphérique interne de ce carter 7.

L'élément intermédiaire comporte ici un arbre de sortie solidaire d'un plateau 4 présentant quatre bossages 5 uniformément répartis sur sa circonférence et déterminant entre eux quatre guides 6 recevant les organes transmetteurs 13, coulissant sans jeu dans ces guides et prenant appui contre les cames primaire 2 et secondaire et ces bossages 5.

Dans cette forme d'exécution, si l'on maintient stationnaire le carter 7 et que l'on impose des rotations successives de 90° à la came primaire 2 on obtient les positions successives illustrées aux figures 19 à 23. Lorsque la came primaire 2 a effectué une révolution complète, passage de la figure 19 à la figure 23, l'élément intermédiaire 4,5 a effectué une rotation de 90° comme le montre la position du bossage 5a et de l'organe transmetteur 13a.

La somme des levées de la came primaire 2 et des levées de la came secondaire 7 est de quatre, égal au nombre d'organes transmetteurs 13.

Pour cet exemple, on réalise un rapport de démultiplication de 4:1 entre les déplacements angulaires de l'arbre d'entrée 1 solidaire de la came primaire 2 et l'élément intermédiaire 3,5. Les deux arbres 1,3 tournent dans le même sens.

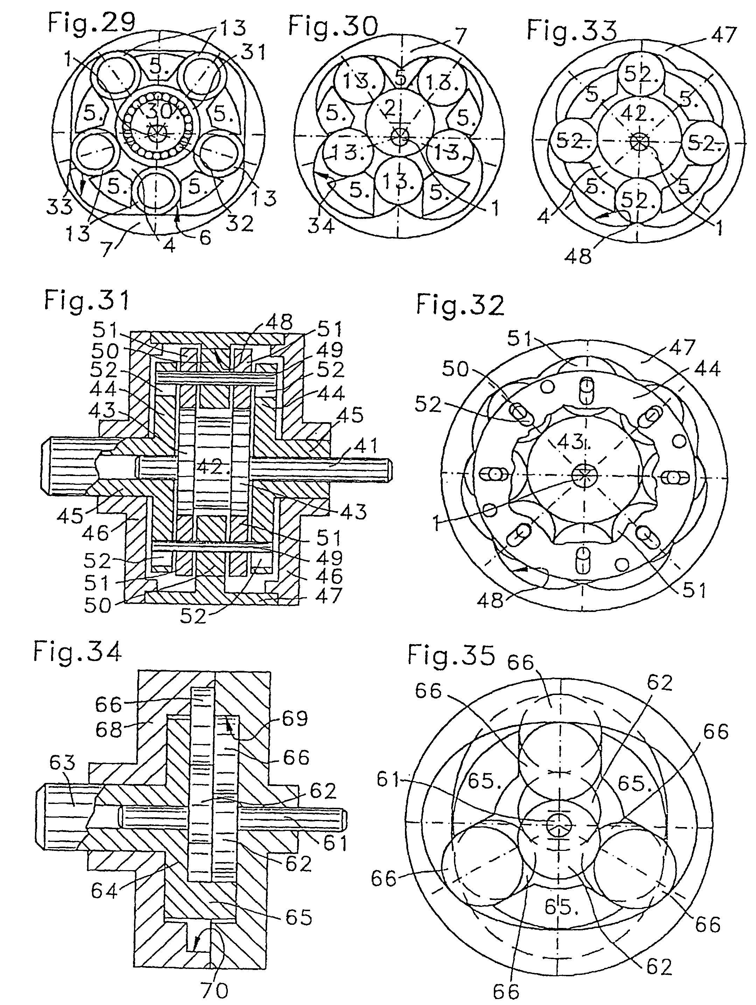

Dans les figures 24 à 28, on a illustré les positions successives d'un mécanisme identique à celui des figures 19 à 23 mais dans lesquelles c'est l'élément intermédiaire 4,5 qui est maintenu stationnaire. Ainsi, pour chaque rotation de 90° de l'arbre d'entrée 1 et de la came primaire 2 dans le sens de la flèche F on voit que le carter 7 effectue une rotation en sens inverse de 30°. Ainsi, pour un tour de la came primaire 2 dans le sens des aiguilles d'une montre on obtient une rotation de 120° du carter 7 dans le sens inverse des aiguilles d'une montre, la levée A de ce carter passant de sa position illustrée à la figure 24 (midi) à celle illustrée à la figure 28 (8 h).

Pour une révolution complète de la came primaire 2, le carter effectue une rotation d'un tiers de tour en sens inverse. On a donc réalisé une division de 3 à 1.

Dans la forme d'exécution illustrée à la figure 29, l'arbre d'entrée 1 porte un excentrique 30 sur lequel est montée folle une came primaire tubulaire 31 à l'aide d'un roulement à aiguille 32. Cette came primaire 31 présente une seule levée.

L'élément intermédiaire, solidaire de l'arbre de sortie 3, comporte un plateau 4 muni de cinq bossages 5 uniformément disposés autour de l'axe dudit plateau 4 et définissant cinq guides radiaux rectilignes 6 recevant chacun un organe transmetteur 13 coulissant sans jeu dans ces guides et les organes transmetteurs 13 sont tubulaires pour réduire les inerties et se déformer légèrement pendant la rotation du système et assurer un sans jeu à l'arrêt.

La paroi périphérique interne du carter 7 présente quatre levées 33 qui constituent la came secondaire.

Le nombre d'organes transmetteurs 13 est égal à la somme des levées de la came primaire 31 et des levées 33 de la came secondaire, soit cinq. Si le carter 7 est maintenu stationnaire, on obtient pour chaque révolution complète de la came primaire 30,31 un déplacement angulaire dans le même sens de l'élément intermédiaire 4,5 de 72°, soit 1/5 de tour.

Dans la variante de cette troisième forme d'exécution illustrée à la figure 30, la forme de la came secondaire est différente bien qu'elle comporte également quatre levées 34. La règle de la somme des valeurs y,z est appliquée dans ces deux variantes.

Dans ces deux variantes également la distance séparant le point bas de la came primaire 2 de chaque point bas de la came secondaire est égale au diamètre d'un organe transmetteur, de même que la distance séparant le point haut de la came primaire de chaque point haut de la came secondaire lorsque ces points sont alignés sur un diamètre du mécanisme.

Ici également le centre des organes transmetteurs 13 est toujours situé sur un cercle dont le centre coïncide avec l'axe de l'excentrique et donc de la came primaire 30.

Les figures 31 et 32 illustrent une forme d'exécution du mécanisme comportant un arbre d'entrée 41 solidaire d'un tambour central 42 portant à chacune de ses extrémités axiale une came primaire à une levée 43, ces cames 43 étant parfaitement alignées angulairement. Cet arbre d'entrée 41 est tourillonné sur un élément intermédiaire comprenant deux flasques 44 solidaires chacun d'un tourillon 45, situés de part et d'autre des cames primaires 43. Ces tourillons sont pivotés fou dans le carter formé de deux flancs latéraux 46 reliés par un anneau 47 dont la section centrale 48 de la face intérieure constitue la came secondaire.

La came primaire 43 est constituée par un excentrique comportant une levée et la came secondaire 48 par un carter présentant sept levées uniformément réparties autour de l'axe du mécanisme.

Ce mécanisme comporte encore huit organes transmetteurs, chacun constitué d'un axe 49 portant un galet central 50 coopérant avec la came secondaire 48 et deux galets latéraux 51 coopérant respectivement chacun avec une des cames primaires 43. Les axes 49 coulissent sans jeu dans des fentes 52 radiales que comportent les flasques 44 de l'élément intermédiaire et servant de guides aux organes transmetteurs.

On retrouve dans cette exécution les mêmes critères régissant le nombre d'organes transmetteurs 49,50,51 qui est égal à la somme des levées de la came primaire 43 et des sept levées de la came secondaire 48, soit ici huit.

De même les distances séparant, pris sur un rayon du mécanisme, les points haut et bas respectivement des cames primaire et secondaire sont égales au diamètre des organes transmetteurs. Les axes 49 des organes transmetteurs sont disposés sur une circonférence dont le centre coïncide avec l'axe de l'excentrique 43.

Dans cette forme d'exécution, si l'élément intermédiaire et son arbre de sortie 45 effectuent 1/8 de tour lorsque la came primaire 43 et son arbre d'entrée 41 effectuent une révolution complète. On a donc un rapport de 8 à 1. Cette exécution permet de transmettre des couples élevés, la presque totalité des frictions étant supprimées par la rotation de l'ensemble des galets formant les organes transmetteurs.

La figure 33 illustre une variante de cette forme d'exécution dans laquelle on a supprimé un organe transmetteur 51 sur deux. La came secondaire 48 comporte toujours sept levées, la came primaire 42 une levée, mais le nombre d'organes transmetteurs 52 est de quatre. Ceci ne modifie pas le rapport de division qui est toujours égal à 1/8. Cette solution permet de simplifier la fabrication pour des usages où le prix de revient est important et le couple d'entrée faible.

Dans cette forme d'exécution, l'organe intermédiaire est du type de celui illustré aux figures 1 à 6 par exemple et comporte un plateau 4 muni de bossages 5 constituant des guides linéaires. Les organes transmetteurs 52 sont constitués par des galets cylindriques.

Dans la forme d'exécution illustrée aux figures 34 et 35 le mécanisme comporte un arbre d'entrée 61 comportant deux excentriques 62 opposés angulairement et formant ensemble une came primaire à deux levées.

L'élément intermédiaire comporte un arbre de sortie 63 portant un plateau 64 muni de trois bossages 65 définissant entre elles des guides rectilignes radiaux pour des organes transmetteurs 66 juxtaposés deux à deux dans chacun de ces guides et coopérant chacun avec un des excentriques 62. L'une des extrémités de l'arbre d'entrée 61 est tourillonnée dans l'arbre de sortie 63 tandis que l'autre l'est dans une moitié 67 du carter 67,68.

Le carter 67,68 présente sur la face interne de chacune de ses moitiés 67,68 une came secondaire 69,70 à deux levées chacune. Les cames secondaires 69,70 sont décalées de 90° de manière à former une came secondaire à quatre levées au total.

La somme des levées de la came primaire 62 et des levées de la came secondaire 69,70 est de six, égal au nombre d'organes transmetteurs 66.

Lorsque l'arbre primaire d'entrée 61 effectue un tour complet, l'arbre de sortie 63 de l'élément intermédiaire effectue une rotation de 120° comme dans la première forme d'exécution décrite, le rapport de démultiplication est de trois.

On constate de la description des formes d'exécution précédentes et de leur fonctionnement que le rapport des vitesses de déplacement, pour un mécanisme dont le carter est fixe, est égal au nombre de levées de la came secondaire augmenté du nombre de levées de la came primaire, divisé par le nombre de levées de la came primaire, soit (3+1):1=4 dans l'exemple des figures 19 à 23 et (7+1):1=8 dans l'exemple des figures 31,32,33 et (**4**+2):2 = 3 dans l'exemple des figures 34,35. Les arbres d'entrée et de sortie tournent dans le même sens. Came secondaire à quatre levées = 360°:4=90°; six organes transmetteurs 360°:6=60°; 90°-60°=30°; 90°:30°=3; division 1:3; 60°:30°=2, division 1:2.

Par contre, lorsque c'est l'élément intermédiaire qui est maintenu fixe, une rotation d'un tour complet du carter, provoque une rotation de la came primaire ou de l'arbre d'entrée égale au nombre de levées de la came secondaire divisé par le nombre de levées de la came primaire, soit trois dans l'exemple des figures 24 à 28. Dans ce cas, le carter tourne en sens inverse de l'arbre d'entrée.

On constate également que le nombre d'organes transmetteurs est généralement égal au nombre de levées de la came secondaire augmenté d'une unité.

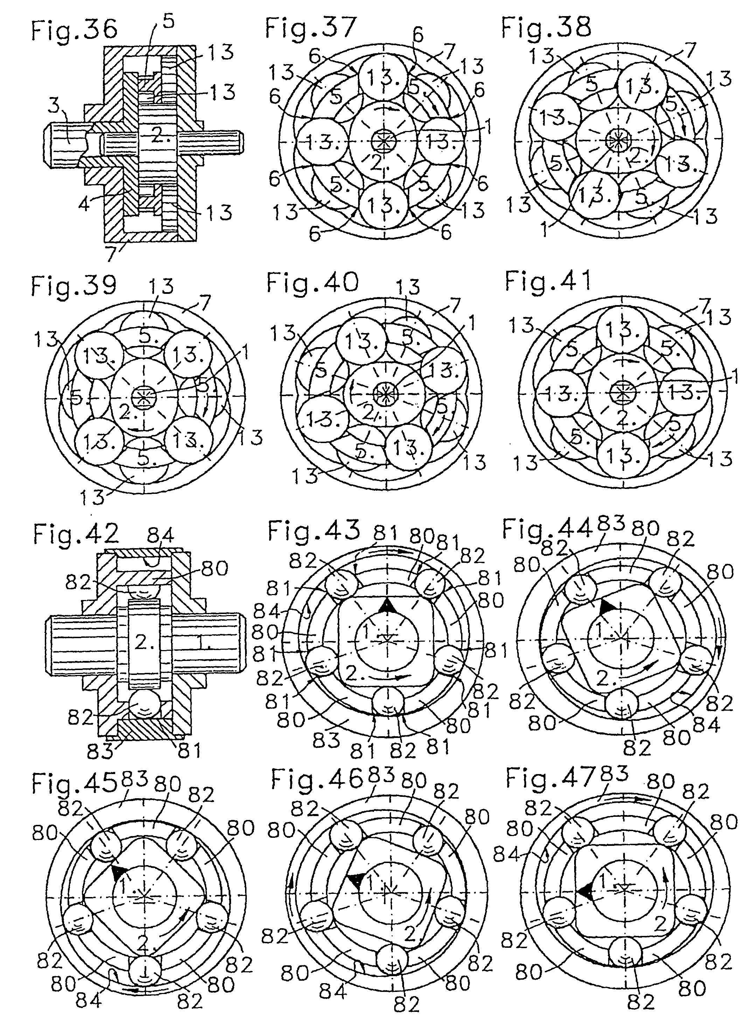

Dans la forme d'exécution illustrée aux figures 36 à 41, l'arbre d'entrée 1 porte une came primaire 2 à deux levées. L'élément intermédiaire ou arbre de sortie 3 comporte un plateau 4 muni de bossages 5 définissant huit guides 6 pour des organes transmetteurs 13, au nombre de huit. Le carter 7 présente une surface périphérique interne formant la came secondaire qui présente six levées. Le carter 7 étant maintenu fixe, l'arbre de sortie 3 tourne quatre fois moins vite que l'arbre d'entrée 1, ce qui correspond au nombre huit, divisé par le nombre de levées de la came primaire, deux. Les deux arbres 1 et 3 tournent dans le même sens.

Dans la forme d'exécution illustrée aux figures 42 à 47, l'arbre 1 est muni d'une came primaire 2 à quatre levées disposées symétriquement autour de cet axe. L'élément intermédiaire est constitué par un boîtier 80 pivoté sur l'arbre d'entrée 1 de part et d'autre de la came primaire 2. Ce boîtier 80 présente cinq perçages 81 pratiqués dans sa paroi périphérique, uniformément répartis autour de l'axe de cette cage 80 et constituant des logements ou guides pour des organes transmetteurs constitués par des billes 82 sphériques.

La came secondaire est ici formée par une bague 83 pivotée sur le boîtier 80 et dont la surface interne 84 qui est excentrée constitue la came secondaire qui ici présente une seule levée.

Si l'on maintient l'élément intermédiaire 80 stationnaire, une révolution complète de la bague 83 dans le sens des aiguilles d'une montre provoque la rotation de 1/4 de tour dans le sens inverse de l'arbre 1. On retrouve bien un rapport de démultiplication de 1 à 4, soit ici égal au nombre de levées de la came primaire divisé par le nombre de levées de la came secondaire. Le nombre d'organes transmetteurs 82 est égal au nombre de levées de la came primaire augmenté du nombre de levées de la came secondaire, soit cinq. Si l'arbre d'entrée 1 muni des quatre levées de la came primaire 2 est maintenu fixe, l'élément intermédiaire 80 tournera cinq fois moins vite que la came secondaire 83 mais dans le même sens. Le rapport sera donc de 1 à 5.

Dans toutes les formes d'exécution du mécanisme, les organes transmetteurs sont toujours en permanence en contact avec les cames primaire et secondaire et avec l'élément intermédiaire dans lesquels ils coulissent radialement.

Ce mécanisme qui ne présente donc aucun jeu permet une transmission desmodromique parfaite du mouvement d'un élément sur l'autre. II y a un glissement ou un roulement permanent des organes transmetteurs qui présentent une surface de contact parfaitement lisse, circulaire ou sphérique sur la came primaire et simultanément sur la came secondaire. Il faut noter que cette disposition des cames permet de réaliser des réducteurs de vitesse coaxiaux dont le boîtier tourne plus vite que l'arbre central à l'inverse de tous les systèmes existants connus.

La forme des transmetteurs peut varier. Ils ont toutefois généralement une portion périphérique sphérique ou cylindrique de section circulaire qui est en contact avec chacune des cames primaire et secondaire.

On remarque que dans toutes les formes d'exécution décrites jusqu'ici, les organes transmetteurs coulissent radialement et perpendiculairement par rapport à l'axe du mécanisme.

Dans des variantes les organes transmetteurs peuvent comporter un corps cylindrique et des extrémités bombées. Ces organes transmetteurs peuvent également être formés de la juxtaposition de plusieurs éléments tournants pour limiter les frictions.

Dans toutes les formes d'exécution du mécanisme, les axes de guidage des guides rectilignes de l'élément intermédiaire sont disposés radialement et/ou perpendiculairement à l'axe du mécanisme.

Dans des formes d'exécution du mécanisme non illustrées, on peut faire en sorte que les organes transmetteurs soient reliés à l'élément intermédiaire ou au corps de cet élément intermédiaire par d'autres moyens que des guides rectilignes dans lesquels ils coulissent. Ainsi, on peut relier chaque organe transmetteur au corps de l'élément intermédiaire par une bielle articulée sur le corps de l'élément intermédiaire et portant l'organe transmetteur. Dans une telle exécution, il n'y a pas de frottement mais uniquement un roulement des organes transmetteurs sur les cames primaire et secondaire et sur le corps de l'élément intermédiaire. Dans une telle exécution, le déplacement des organes transmetteurs par rapport au corps de l'élément intermédiaire s'effectue suivant un arc de cercle soit selon un trajet curviligne et non rectiligne.

## Revendications

1. Mécanisme desmodromique comportant :
a) des organes transmetteurs (13) de mouvement reliés à un élément intermédiaire et prenant appui sur celui-ci;
b) une came primaire (2) en contact permanent avec chacun des organes transmetteurs (13);
c) une came secondaire en contact permanent avec chacun des organes transmetteurs (13);
dans lequel les organes transmetteurs présentent des surfaces de contact avec les cames, de forme telle qu'elles assurent un contact permanent et simultané avec les cames primaire et secondaire; la came primaire, la came secondaire et l'élément intermédiaire étant assemblés les uns aux autres de façon à se déplacer rotativement et/ou linéairement les uns par rapport aux autres d'une façon impérative et avec des vitesses différentielles invariables pour toutes les positions du mécanisme; l'élément intermédiaire étant constitué d'un corps (3, 4, 5) comportant des guides (6) dans chacun desquels coulisse librement un organe transmetteur (13); ce mécanisme étant **caractérisé par le fait que** l'espace compris entre deux organes transmetteurs adjacents, la portion du corps de l'élément intermédiaire comprise entre ces deux organes transmetteurs, la portion de came secondaire également comprise entre ces deux organes transmetteurs et les deux faces d'appui des extrémités axiales des organes transmetteurs constitue une chambre étanche à volume variable (10) en fonction de la position relative des cames primaire et secondaire et de l'élément intermédiaire.

2. Mécanisme selon la revendication 1, **caractérisé par le fait que** l'élément intermédiaire (3, 4, 5, 6) comporte des passages entre deux organes transmetteurs (13) adjacents et que l'espace compris entre deux organes transmetteurs adjacents et les cames primaire et secondaire d'une part, et d'autre part entre les faces frontales des organes transmetteurs (13) et leurs faces d'appui, constitue la chambre à volume variable (10).

3. Mécanisme selon la revendication 2, **caractérisé par le fait que** la came primaire (139), par des lumières judicieusement placées sur son pourtour, a une fonction de distributeur de fluide.

4. Mécanisme selon les revendications 2 et 3, **caractérisé par le fait qu'**au moins un secteur (143) disposé sur le pourtour de la came primaire est en communication avec au moins une chambre à volume variable.

5. Mécanisme selon les revendications 2 et 3, **caractérisé par le fait qu'**un perçage (145) débouche sur la périphérie de la came primaire (139).

6. Mécanisme selon la revendication 1, **caractérisé par le fait que** la came secondaire, par des tubulures (24, 25) judicieusement placées sur son pourtour, a une fonction de distributeur de fluide.

7. Mécanisme selon la revendication 1, **caractérisé par le fait que** les axes de guidage des guides rectilignes (6) de l'élément intermédiaire sont disposés radialement et/ou perpendiculairement à l'axe du mécanisme.

8. Mécanisme selon la revendication 1, **caractérisé par le fait que** les organes transmetteurs (13) sont munis d'un bandage déformable élastiquement.

## Claims

1. Desmodromic mechanism, including:
a) motion transmitting members (13) connected to an intermediate element and bearing upon the same ;
b) a primary cam (2) in permanent contact with each one of the transmitting members (13);
c) a secondary cam in permanent contact with each one of the transmitting members (13);
wherein the transmitting members exhibit contact surfaces with the cams of such a shape as to ensure a contact which is permanent and simultaneous with the primary and secondary cams ; the primary cam, the secondary cam and the intermediate element being assembled to one another in such a manner as to move forcibly in rotation and / or linearly relative to one another with invariable differential speeds for all the positions of the mechanism, the intermediate element being comprised of a body (3, 4, 5) including guides (6) in each one of which slides freely a transmitting member (13); this mechanism being **characterised in that** the space comprised between two adjoining transmitting members, the portion of the body of the intermediate element comprised between these two transmitting members, the portion of the secondary cam equally comprised between these two transmitting members and the two bearing faces of the axial ends of the transmitting members constitutes a sealed chamber (10) having a volume which is variable, depending on the relative position of the primary and of the secondary cams and of the intermediate element.

2. A mechanism according to claim 1, **characterised in that** the intermediate element (3, 4, 5, 6) includes passages between two adjoining transmitting members (13) and **in that** the space comprised between, on the one hand, two adjoining transmitting members and the primary and secondary cams and, on the other hand, the front faces of the transmitting members (13) and their bearing faces, constitutes the chamber (10) having a variable volume.

3. A mechanism according to claim 2, **characterised in that** the primary cam (139) functions as a fluid distributor, owing to lumens appropriately positioned along its periphery.

4. A mechanism according to claims 2 and 3, **characterised in that** at least one sector (143) provided on the periphery of the primary cam is in communication with at least one chamber having a variable volume.

5. A mechanism according to claims 2 and 3, **characterised in that** a bore (145) opens on the periphery of the primary cam (139).

6. A mechanism according to claim 1, **characterised in that** the secondary cam functions as a fluid distributor, owing to tubes (24, 25) appropriately positioned on its periphery.

7. A mechanism according to claim 1, **characterised in that** the guiding axes of the rectilinear guides (6) of the intermediate element are arranged radially and / or perpendicularly with respect to the axis of the mechanism.

8. A mechanism according to claim 1, **characterised in that** the transmitting members (13) are provided with a band capable of deforming elastically.

## Patentansprüche

1. Desmodromischer Antrieb mit:
a) Organen (13) für eine Bewegungsübertragung, die mit einem Zwischenelement verbunden sind und sich auf dieses Element aufstützen;
b) einer primären Nockenscheibe (2) in dauernder Berührung mit jedem der Übertragungsorgane (13);
c) einer sekundären Nockenscheibe in dauernder Berührung mit jedem der Übertragungsorgane (13);
in dem die Übertragungsorgane Berührungsflächen mit den Nockenscheiben aufweisen, deren Gestalt derart ist, dass sie eine dauernde und gleichzeitige Berührung mit der primären und sekundären Nockenscheibe gewährleisten; wobei die primäre Nockenscheibe, die sekundäre Nockenscheibe und das Zwischenelement so zusammengebaut sind, dass sie sich zwangsweise und mit in allen Stellungen des Antriebs unveränderlichen differentiellen Geschwindigkeiten drehend und/oder linear zueinander bewegen; das Zwischenelement aus einem Körper (3, 4, 5) besteht, der Führungen (6) umfasst, in deren jeder ein Übertragungsorgan (13) frei gleitet; und dieser Antrieb **dadurch gekennzeichnet ist, dass** der zwischen zwei benachbarten Übertragungsorganen, dem zwischen diesen beiden Übertragungsorganen eingeschlossenen Teil des Körpers des Zwischenelements, dem ebenfalls zwischen diesen beiden Übertragungsorganen eingeschlossenen Teil der sekundären Nockenscheibe sowie den beiden Auflageflächen der axialen Enden der Übertragungsorgane befindliche Raum eine dichte Kammer eines in Abhängigkeit von der relativen Stellung der primären und sekundären Nockenscheibe sowie des Zwischenelements variierenden Volumens (10) darstellt.

2. Antrieb nach Anspruch 1, **dadurch gekennzeichnet, dass** das Zwischenelement (3, 4, 5, 6) Durchführungen zwischen zwei benachbarten Übertragungsorganen (13) umfasst und dass der zwischen zwei benachbarten Übertragungsorganen und der primären und sekundären Nockenscheibe einerseits und zwischen den Vorderseiten der Übertragungsorgane (13) und ihren Auflageflächen andererseits eingeschlossene Raum die Kammer variierenden Volumens (10) darstellt.

3. Antrieb gemäss Anspruch 2, **dadurch gekennzeichnet, dass** die primäre Nockenscheibe (139) durch wohlüberlegt auf ihrem Umfang angeordnete Öffnungen eine Funktion als Fluidverteiler besitzt.

4. Antrieb gemäss den Ansprüchen 2 und 3, **dadurch gekennzeichnet, dass** zumindest ein auf dem Umfang der primären Nockenscheibe angeordneter Kreisausschnitt (143) mit zumindest einer Kammer variierenden Volumens in Verbindung steht.

5. Antrieb gemäss den Ansprüchen 2 und 3, **dadurch gekennzeichnet, dass** eine Bohrung (145) auf der Peripherie der primären Nockenscheibe (139) mündet.

6. Antrieb gemäss Anspruch 1, **dadurch gekennzeichnet, dass** die sekundäre Nockenscheibe durch wohlüberlegt auf ihrem Umfang angeordnete Kanäle (24, 25) eine Funktion als Fluidverteiler besitzt.

7. Antrieb gemäss Anspruch 1, **dadurch gekennzeichnet, dass** die Führungsachsen der geradlinigen Führungselemente (6) des Zwischenelements radial und/oder senkrecht zur Achse des Antriebs angeordnet sind.

8. Antrieb gemäss Anspruch 1, **dadurch gekennzeichnet, dass** die Übertragungsorgane (13) mit einer elastisch verformbaren Bandage versehen sind.
